# EUROPEAN PATENT SPECIFICATION

(11) **EP 3 941 890 B1**
(45) Date of publication and mention of the grant of the patent: **07.06.2023**
(21) Application number: 20723469.1
(22) Date of filing: 17.03.2020
(51) Int. Cl.: C05C 9/00, C05G 5/30, C05G 3/40

(54) **THE USE OF AN OIL-BASED COMPOSITION FOR REDUCING AMMONIA VOLATILIZATION IN UREA-BASED FERTILIZER APPLICATION**
VERWENDUNG EINER ZUSAMMENSETZUNG AUF ÖLBASIS ZUR VERMINDERUNG DER AMMONIAKVERFLÜCHTIGUNG IN DER HARNSTOFFBASIERTEN DÜNGEMITTELANWENDUNG
UTILISATION D'UNE COMPOSITION À BASE D'HUILE POUR RÉDUIRE LA VOLATILISATION DE L'AMMONIAC DANS UNE APPLICATION D'ENGRAIS À BASE D'URÉE

(30) Priority: 19.03.2019 GB 201903755
(43) Date of publication of application: 26.01.2022
(73) Proprietor: Yara UK Limited, York, YO42 1DN (GB)
(72) Inventor: WARD, Stuart, Pocklington, York YO42 1DN (GB); BECERRA, Andres Felipe Rangel, Pocklington, York YO42 1DN (GB); KWAST, Anke, 48249 Dülmen (DE); GAJIC , Ana, 48249 Dülmen (DE)
(74) Representative: Dummett Copp LLP
(86) International application number: PCT/GB2020/050680
(87) International publication number: WO 2020/188268

(56) References cited:
- EP-A1- 3 366 658
- WO-A1-2017/024405
- GB-A- 2 513 232

## Description

### Field of the invention

This invention relates to the use of an oil-based composition for reducing ammonia volatilization upon application of urea-based fertilizers in soil. It also relates to the use of coated urea-based fertilizer particles for reducing ammonia volatilization upon application of urea-based fertilizers in soil.

### Background of the invention

Nitrogen (N) is one of the most important nutrients for plants. It is used to build amino acids, proteins, enzymes such as chlorophyll, and other vital components of any plant or crop. Plants cannot fix nitrogen gas from the atmosphere; they rely on their roots to absorb the nitrogen they need in the form of nitrate (NO₃⁻) and ammonium (NH₄⁺) ions from the soil. Although all soils contain some nitrogen, farmers often have to supply their crop with additional nitrogen sources to ensure optimal growth and high yields. Fertilizer is the most common method to provide supplementary nitrogen and can have two origins: organic (animal manure for example) or mineral. Mineral fertilizers can contain nitrogen in three different forms: urea, ammonium salts and nitrate salts. Today, urea is the most common source of nitrogen in mineral fertilizers due to its high N content (46% by weight) and low cost. However, urea is very poorly absorbed by plants, it is transformed in the soils into nitrate or ammonium ions to become available to the plant.

Urease is a naturally occurring enzyme present in all soils and can catalyze the conversion of urea to carbamic acid, which then decomposes into ammonia and carbon dioxide. At this stage, ammonia, a volatile gas, needs to react with water to form ammonium ions, otherwise important amounts of N (up to 30% of total N content added as urea) are lost due to evaporation in the atmosphere, depending on the soil type, water content, pH, climate, etc.

A known method to reduce ammonia volatilization is to reduce urease activity in soils. When urea is transformed into ammonia at a low rate, the conversion to ammonium is more efficient and less ammonia is lost in the atmosphere. A known method to reduce urease activity is to add a urease inhibitor to the fertilizer particle. The inhibitor is released in the soil with urea and reduces urease activity.

Urease inhibitors have been intensively researched and several families of compounds have been disclosed. In addition to the inhibitory effect, these products must be non-toxic to plants, active at low concentrations, stable over long periods and compatible in formulations with urea fertilizers. The most popular class of urease inhibitors are phosphoric triamides, discovered in the mid-80's (US 4,530,714). In this family, N-(n-butyl) thiophosphoric triamide (nBTPT) is the most used urease inhibitor nowadays. The compound itself does not have any inhibition effect, but it is slowly oxidized into N-(n-butyl) phosphoric triamide (nBPT), which inhibits the urease.

Fertilizer compositions containing urease inhibitors, mixed with the fertilizers or added as a coating, are now well known in the agriculture field. However, the inhibitor has limited stability over time in these compositions, especially those containing sulfate ions, such as urea ammonium sulfate fertilizers.

Further, it has recently been shown that nBTPT may actually be toxic to plants (*Front. PlantSci* 6:1007 and *Front. PlantSci* 7:845), so the use of this compound might be questioned in the future. Sulfur is one of the secondary nutrients for plants. Due to intensive farming and the reduction of sulfur emissions in the air by industries and the subsequent supply to the ground via rain, modern fertilization practices require the addition of sulfur.

Good agricultural practice usually requires nitrogen and sulfur in a ratio 10/1 to 5/1 in order to answer to the crop demand, for example 150 kg nitrogen/ha/year and 30 kg sulfur/ha/year.

Lack of sulfur results both in a lower quantity and a lower quality of crops, and sulfur deficiency is often reflected in the content and type of proteins. Sulfur is indeed a major element entering into the chemistry of the cells in molecules such as amino acids (cysteine, methionine, etc.). It is also a catalyst for the photosynthesis and, in some cases, may improve the fixation of atmospheric nitrogen.

Conventionally, sulfur has been applied to the soil in the form of elemental sulfur, or as compounds such as ammonium sulfate, ammonium bisulfate, thiosulfates, sulfides or gypsum, or in combination with other fertilizer materials such as urea, for example as a physical blend of urea and ammonium sulfate, or as a co-granulated urea and ammonium sulfate material, the latter which is hereinafter called urea ammonium sulfate, abbreviated as UAS.

It is well known that introducing a boron source, such as borax or boric acid, can reduce ammonia emissions occurring from decomposition of urea in soil.

US Patent application 2012/067094 discloses fertilizer comprising a boron source (boric acid or borax) and urea. The boron source is mixed with a binder and the resulting mixture is granulated. The obtained granules are then coated with urea. Alternatively, the boron source can be added to a urea melt and granulated to obtain homogeneous urea particles containing a boron source. The final particles contain 0.3 to 5% by weight of boron and release less ammonia than standard urea upon application to soil.

US Patent 3,565,599 discloses homogeneous urea particles comprising 4 to 8% by weight of a boron source, a metal borate or boric acid, and a hydrophobic substance. The boron source acts as a urease inhibitor and reduces the amount of ammonia volatilization.

WO-Patent application 2017/024405 discloses a method to reduce ammonia volatilization by providing a plant with a urea prill coated with a plant-available source of boron. The boron source can be potassium borate, disodium octaborate tetrahydrate, potassium tetraborate tetrahydrate, boric acid and mixtures thereof. The urea prills are either dry-coated with the boron source in powder form or first coated with 0.5% by weight of canola oil and finally coated with the boron source in powder form. The final content of boron is 0.1 to 2.5% by weight of the particle, examples disclosed in the application contain between 1.25 to 1.35% by weight of boron. Further boron containing coating compositions used for different purposes are disclosed in GB 2 513 232 A and EP 3 366 658 A1.

The mechanism(s) of the reduction of ammonia volatilization by water-soluble boron sources are not well understood, but it is believed that the boron inhibit the growth of urease-producing microbes and/or inhibit the urease enzymes directly.

### Summary of the invention

According to one aspect of the invention, use of an oil-based composition comprising boron-containing particles, for the reduction of ammonia volatilization upon application of urea-based fertilizer particles to soil, wherein the urea-based fertilizer particles are coated with the oil-based composition comprising boron-containing particles prior to their application to soil is provided. The use is characterized in that the boron-containing particles essentially consists of a material with a low water solubility of less than 10 g/L at 25°C; and at least 95 % of the boron-containing particles have a particle size in the range of 0.1 and 60 µm, as measured by laser diffraction analysis.

According to another aspect, use of urea-based fertilizer particles coated with an oil-based composition comprising boron-containing particles for the reduction of ammonia volatilization upon application of the urea-based fertilizer particles to soil, is provided. The use is characterized in that the boron-containing particles essentially consists of a material with a low water solubility of less than 10 g/L at 25°C; and at least 95 % of the boron-containing particles have a particle size in the range of 0.1 and 60 µm, as measured by laser diffraction analysis.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
*"*A*"*, *"*an*"*, and *"*the*"* as used herein refers to both singular and plural referents unless the context clearly dictates otherwise. By way of example, *"*a compartment*"* refers to one or more than one compartment.
*"*About*"* as used herein referring to a measurable value such as a parameter, an amount, a temporal duration, and the like, is meant to encompass variations of +/-20 % or less, preferably +/-10 % or less, more preferably +/-5 % or less, even more preferably +/-1 % or less, and still more preferably +/-0.1 % or less of and from the specified value, in so far such variations are appropriate to perform in the disclosed invention. However, it is to be understood that the value to which the modifier *"*about*"* refers is itself also specifically disclosed.
*"*Comprise*"*, *"*comprising*"*, and *"*comprises*"* and *"*comprised of*"* as used herein are synonymous with *"*include*"*, *"*including*"*, *"*includes*"* or *"*contain*"*, *"*containing*"*, *"*contains*"* and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression *"*weight%*"*, *"*weight percent*"*, *"*% w/w*"*, *"*wt%*"* or *"*%wt*"*, here and throughout the description unless otherwise defined, refers to the relative weight of the respective component based on the overall weight of the formulation.

The present disclosure provides the use of an oil-based composition comprising boron-containing particles, for the reduction of ammonia volatilization upon application of urea-based fertilizer particles to soil, wherein the urea-based fertilizer particles are coated with the oil-based composition comprising boron-containing particles prior to their application to soil. The use is characterized in that the boron-containing particles essentially consists of a material with a low water solubility of less than 10 g/L at 25°C; and at least 95 % of the boron-containing particles have a particle size in the range of 0.1 and 60 µm, as measured by laser diffraction analysis.

It was surprisingly found that boron sources comprising materials with low water solubility (less than 10 g/L at 25°C) gave a better reduction in ammonia volatilization than other boron sources with a high water-solubility. To obtain the best effect on ammonia volatilization, it was found that at least 95% of the boron-containing particles need to have a size in the range of 0.1 to 60 µm. In particular, 95% of the particles may have a size in the range of 0.1 to 55 µm. More in particular, 95% of the particles may have a size in the range of 0.1 to 50 µm. Even more in particular, 100% of the particles may have a size in the range of 0.1 to 50 µm. Since it is believed that boron decreases ammonia volatilization via inhibition of the growth of microbes or of enzymes, it is expected that boron sources with high water-solubility would be more efficient than those with a low water-solubility.

Several techniques for particle size measurement exist. It was found that laser diffraction analysis is a suitable technique to measure the boron-containing particles used in the present invention. Laser diffraction analysis is a well-known technique in the field of particle size measurement. This analysis provides a size distribution profile of the particles contained in a sample. Based on that, it is relatively straightforward to characterize a material by the percentage of particles possessing a specific particle size range.

The oil-based composition comprising the boron-containing particles may be added to the fertilizer particles by any conventional means, such as spraying.

According to another aspect, the use of urea-based fertilizer particles coated with an oil-based composition comprising boron-containing particles for the reduction of ammonia volatilization upon application of the urea-based fertilizer particles to soil, is provided. The use is characterized in that the boron-containing particles essentially consists of a material with a low water solubility of less than 10 g/L at 25°C; and at least 95 % of the boron-containing particles have a particle size in the range of 0.1 and 60 µm, as measured by laser diffraction analysis.

According to one embodiment, the boron-containing particles essentially consist of colemanite. Colemanite is a naturally occurring boron-containing mineral with the following chemical composition Ca₂B₆O₁₁·5H₂O. It has a low water-solubility (8 g/L at 25°C), whereas boric acid and sodium- and potassium-based borates have a much higher solubility: boric acid (47 g/L), borax (51 g/L), disodium octaborate tetrahydrate (223 g/L), potassium tetraborate tetrahydrate (158 g/L).

Colemanite particles can be bought from commercial suppliers directly with the desired grade, for example Etimine, and it is also possible to buy particles with a larger size than desired and micronize the particles using a suitable technique, such as jet milling or bead milling. It was found that bead milling is particularly suitable to provide colemanite particles with the desired size for the present invention.

According to one embodiment, the boron-containing particles represent 30 to 80 % by weight of the oil-based composition, in particular the boron-containing particles represent 50 to 80 % by weight of the oil-based composition. It is advantageous to achieve as high a loading of the boron-containing particles in the oil-based composition as possible, as this allows a sufficiently high addition of boron onto the fertilizer particle without over-loading the fertilizer particle with oil which can make the final product sticky and difficult to handle. The loading may depend on the other components used in the composition such as the type of carrier oil, the type of dispersant, etc.

According to one embodiment, the oil used in the composition may be any suitable natural, mineral or synthetic oil, such as a mineral white oil, but preferably an environmentally acceptable oil such as a vegetable oil is used. Suitable vegetable oils include rapeseed oil, soya oil, sunflower oil, linseed oil, castor oil, or other similar vegetable oils. Other oils, such as methylated oils or modified vegetable oils may also be used, but not water-miscible materials. In one embodiment, the oil comprised in the oil-based composition is a mixture of two or more of the aforementioned oils.

According to one embodiment, the natural oil in the oil-based composition may be a vegetable oil. Surprisingly, vegetable oil, e.g. rapeseed oil, turned out to be a much better oil for dispersing boron-containing particles than mineral white oil.

According to one embodiment, the oil-based composition comprising boron-containing particles may comprise one or more of a dispersing agent, a rheology agent, a thickener, an anti-settle agent and/or a colorant. It may be desirable for the oil-based composition to have good stability over time to allow for storage, so it is necessary to prevent rapid settlement of the boron-containing particles from the suspension. Suitable rheology agents, thickeners and anti-settling agents include clays such as sepiolite, bentonite, attapulgite, hectorite, palygorscite and organically modified clays; polyurethanes; polyurea; hydrophilic fumed silica; hydrophobic fumed silica; fumed mixed oxides.

A colorant, either dye or pigment, may be added to the formulation in order to aid monitoring of the coating process and to enhance the physical appearance of the final fertilizer product. Examples of suitable pigments classes include, but are not limited to, Phthalocyanine Blues (for example, C.I. Pigment Blues 15, 15:1, 15:2, 15:3, 15:4) and Aluminum Chlorophthalocyanine (for example, C.I. Pigment Blue 79); Ultramarine Blue; red, yellow and green iron oxides.

According to one embodiment, the oil-based composition comprising boron-containing particles represents less than 1.0% w/w of the final fertilizer particle. In particular, the oil-based composition represents less 0.8% w/w of the final particle. More in particular, the oil-based composition represents less than 0.6% w/w of the final particle.

To achieve a satisfactory decrease in ammonia volatilization, a high loading in boron is desirable. However, if the loading of the oil-based composition is too high, the physical properties, such as particle strength, anti-caking character, of the fertilizer particles will decrease, so it is important to obtain a balance between these aspects.

According to one embodiment, the urea-based fertilizer particles may be selected from the group of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN), urea ammonium sulphate (UAS), urea phosphate, urea ammonium phosphate (UAP), urea potassium salts (UK), urea-based NPK fertilizer particles, and mixtures thereof. Urea contains only one nutrient, N, among the many required by the plant. It may be advantageous to use a fertilizer particle comprising several nutrients, as it reduces the number of applications required to supply all the nutrients a plant or crop needs. It may also be advantageous to supply N to the plant with two different sources of N. Urea is not immediately available to the plant, so having a source of N as ammonium or nitrate ions may provide an advantage. UAS is a well-known urea-based fertilizer and is widely used today. It supplies N in two different forms, urea and ammonium, and sulfur which is a secondary nutrient. UAS may be supplied with different ratios between urea and ammonium sulfate to adapt to the specific need of the plant.

According to one embodiment, the fertilizer particles may comprise a source of any of the secondary nutrients calcium, magnesium, sulfur, and/or any of the micronutrients boron, copper, iron, manganese, molybdenum and zinc, and mixtures thereof. Each of these nutrients plays a key role in the growing cycle of crops and may need to be supplied at some point during the growing season. However, the plants require a lower mass of each nutrient compared to the three primary nutrients.

The calcium content of the mineral fertilizer particles may be from about 0 up to about 24 wt% (expressed as CaO).

The magnesium content of the mineral fertilizer particles may be from about 0 up to 10 wt%, in particular from about 0.5 up to about 10 wt% (expressed as MgO).

The sulfur content of the mineral fertilizer particles may be at most 40 wt%, in particular it may be from about 5 up to 40 wt% (expressed as SO₃).

The boron content of the mineral fertilizer particles may be from about 0 up to 0.5 wt%, in particular it may be at most 0.25 wt%. If present, the boron content may be at least 0.01 wt%.

The copper content of the mineral fertilizer particles may be from about 0 up to about 1.0 wt%, in particular at most 0.6 wt%. If present, the copper content may be at least 0.005 wt%.

The iron content of the mineral fertilizer particles may be from about 0 up to about 1.5 wt%, in particular at most 0.8 wt%. If present, the iron content may be at least 0.05 wt%.

The manganese content of the mineral fertilizer particles may be from about 0 up to about 1.5 wt%, in particular at most 0.8 wt%. If present, the manganese content may be at least 0.02 wt%.

The molybdenum content of the mineral fertilizer particles may be from about 0 up to about 1.0 wt%, in particular at most 0.1 wt%. If present, the manganese content may be at least 0.002 wt%.

The zinc content may be from about 0 up to about 1.0 wt%, in particular at most 0.5 wt%. If present, the zinc content may be at least 0.01 wt%.

### EXPERIMENTAL

### Example 1:

Fertilizer particles consisting of urea ammonium sulfate with a N content of 40% by weight and a S content of 5.5% by weight was coated with an oil-based composition comprising boron-containing particles. Five different boron sources were investigated: boric acid (as a comparative example), colemanite 45 µm (100% of the particles have a size below 50 µm) (according to the invention), colemanite 75 µm (82% of the particles have a size below 75 µm) (as a comparative example), disodium octaborate (as a comparative example) and zinc borate (as a comparative example). A sample coated with only oil was used as a control (as a comparative example). The coated fertilizer particles were laid on two different soils, possessing different pH. An airstream is led through an Erlenmeyer vessel containing the fertilizer on pre-incubated soil, and further pulled through vessels containing boric acid traps. Ammonia lost from the fertilizer is absorbed by the boric acid, and the rate of ammonia absorbed can be measured by titration of the remaining boric acid. Ammonia volatilization was measured at four time points (after 3, 7, 10 and 14 days respectively). The amount of ammonia volatilization measured is summarized in table I (soil with pH = 6.2) and table II (soil with pH = 7.6). In both cases, the sample coated with the colemanite 45 µm showed the best reduction in ammonia volatilization.

**Table I: Ammonia loss (in % to amount of N applied) in soil with pH = 6.2**

| Coating | Day 3 | Day 7 | Day 10 | Day 14 |
|---|---|---|---|---|
| Oil^{∗} | 0.29 | 2.72 | 5.70 | 7.49 |
| Oil + Boric acid* | 0.21 | 1.74 | 3.95 | 5.66 |
| Oil + Colemanite (45 µm) | 0.16 | 1.46 | 3.28 | 5.00 |
| Oil + Colemanite (75 µm)^{∗} | 0.28 | 1.85 | 4.58 | 6.32 |
| Oil + Disodium octaborate^{∗} | 0.21 | 1.61 | 4.43 | 6.07 |
| Oil + Zinc borate^{∗} | 0.12 | 1.70 | 3.69 | 5.21 |

| | | | | |
|---|---|---|---|---|
| ^{∗}Comparative example | | | | |

**Table II: Ammonia loss (in % to amount of N applied) in soil with pH = 7.6**

| Product | Day 3 | Day 7 | Day 10 | Day 14 |
|---|---|---|---|---|
| Oil^{∗} | 1.82 | 5.78 | 7.53 | 8.08 |
| Oil with Boric acid^{∗} | 1.09 | 5.16 | 6.40 | 7.02 |
| Oil with Colemanite (45 µm) | 1.05 | 3.46 | 4.55 | 4.94 |
| Oil with Colemanite (75 µm)^{∗} | 1.47 | 5.45 | 7.22 | 7.70 |
| Oil with Disodium octaborate^{∗} | 1.92 | 6.59 | 8.26 | 8.77 |
| Oil with Zinc borate^{∗} | 1.35 | 5.68 | 6.95 | 7.56 |

| | | | | |
|---|---|---|---|---|
| *Comparative example | | | | |

### Example 2:

Fertilizer particles consisting of urea ammonium sulfate with a N content of 40% by weight and a S content of 5.6% by weight was coated an oil-based composition comprising colemanite 45 µm (100% of the particles have a size below 50 µm). Another series of particles of identical fertilizer composition were coated with the same oil as the first series without any colemanite (as a comparative example). Another series of particles of identical fertilizer composition was used uncoated (as a comparative example). The fertilizer particles were laid on three different soils, possessing different pH (6.2, 6.4 and 7.6). An airstream is led through an Erlenmeyer vessel containing the fertilizer on pre-incubated soil, and further pulled through vessels containing boric acid traps. Ammonia lost from the fertilizer is absorbed by the boric acid, and the rate of ammonia absorbed can be measured by titration of the remaining boric acid. Ammonia volatilization was measured 14 days after the application of fertilizer. The results (in wt% of volatilized N) are presented in table III. On all three soils, the particles coated with the oil-based composition comprising colemanite 45 µm showed a reduction in ammonia volatilization.

**Table III: Ammonia loss (in % to amount of N applied) in different soils**

| Particle coating | Soil with pH = 6.2 | Soil with pH = 6.4 | Soil with pH = 7.6 |
|---|---|---|---|
| None^{∗} | 7.37 | 7.54 | 15.07 |
| Oil^{∗} | 7.28 | 8.09 | 13.77 |
| Oil with colemanite 45 µm | 5.77 | 6.78 | 13.68 |

| | | | |
|---|---|---|---|
| ^{∗}Comparative example | | | |

## Claims

1. Use of an oil-based composition comprising boron-containing particles, for the reduction of ammonia volatilization upon application of urea-based fertilizer particles to soil, wherein the urea-based fertilizer particles are coated with the oil-based composition comprising boron-containing particles prior to their application to soil;
**characterized in that** the boron-containing particles essentially consist of a material with a low water solubility of less than 10 g/L at 25°C; and at least 95 % of the boron-containing particles have a particle size in the range of 0.1 and 60 µm, as measured by laser diffraction analysis.

2. Use of urea-based fertilizer particles coated with an oil-based composition comprising boron-containing particles for the reduction of ammonia volatilization upon application of the urea-based fertilizer particles to soil,
**characterized in that** the boron-containing particles essentially consist of a material with a low water solubility of less than 10 g/L at 25°C; and at least 95 % of the boron-containing particles have a particle size in the range of 0.1 and 60 µm, as measured by laser diffraction analysis.

3. Use according to any one of claims 1 to 2, wherein the boron-containing particles essentially consist of colemanite.

4. Use according to any one of claims 1 to 3, wherein the boron-containing particles represent 30 to 80 % by weight of the oil-based composition, more preferably 50 to 80 % by weight.

5. Use according to any one of claims 1 to 4, wherein at least 95 % of the boron-containing particles have a size in the range of 0.1 to 50 µm.

6. Use according to any one of claims 1 to 5, wherein the oil in the oil-based composition is selected from the group of natural oil, mineral oil, synthetic oil, or any mixture of two or more of the aforementioned oils.

7. Use according claim 6, wherein the natural oil in the oil-based composition is a vegetable oil.

8. Use according to any one of claims 1 to 7, wherein the oil-based composition further comprises one or more of a dispersing agent, a rheology agent, a thickener, an anti-settling agent and/or a colorant material.

9. Use according to any one of claims 1 to 8, wherein the urea-based fertilizer particles are coated with less than 1 % by weight of the oil-based composition, more preferably less than 0.6 % by weight.

10. Use according to any one of claims 1 to 9, wherein the urea-based fertilizer particles are selected from the group of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN), urea ammonium sulphate (UAS), urea phosphate, urea ammonium phosphate (UAP), urea potassium salts (UK), urea-based NPK fertilizer particles, and mixtures thereof.

11. Use according to any one of claims 1 to 10, wherein the fertilizer particles further comprise a source of any of the secondary nutrients calcium, magnesium, sulfur, and/or any of the micronutrients boron, copper, iron, manganese, molybdenum and zinc, and mixtures thereof.

## Patentansprüche

1. Verwendung einer Zusammensetzung auf Ölbasis, welche Partikel aufweist, die Bor enthalten, zur Verminderung der Ammoniakverflüchtigung beim Ausbringen von harnstoffbasierten Düngemittelpartikeln auf das Erdreich, wobei die harnstoffbasierten Düngemittelpartikel vor dem Ausbringen auf das Erdreich mit der Zusammensetzung auf Ölbasis, welche Partikel aufweist, die Bor enthalten, beschichtet werden;
**dadurch gekennzeichnet, dass**
die Partikel, die Bor enthalten, im Wesentlichen aus einem Material mit einer geringen Wasserlöslichkeit von unter 10 g/L bei 25°C, bestehen, und, dass wenigstens 95 % der Partikel, die Bor enthalten, eine Partikelgröße im Bereich zwischen 0,1 und 60 µm haben, gemessen per Laserbeugungs-Partikelgrößenanalyse.

2. Verwendung von harnstoffbasierten Düngemittelpartikeln, beschichtet mit einer Zusammensetzung auf Ölbasis, welche Partikel aufweist, die Bor enthalten, zur Verminderung der Ammoniakverflüchtigung beim Ausbringen der harnstoffbasierten Düngemittelpartikel auf das Erdreich,
**dadurch gekennzeichnet, dass**
die Partikel, die Bor enthalten, im Wesentlichen aus einem Material mit einer geringen Wasserlöslichkeit, unter 10 g/L bei 25°C, bestehen, und, dass wenigstens 95 % der Partikel, die Bor enthalten, eine Partikelgröße im Bereich von 0,1 bis 60 µm haben, gemessen per Laserbeugungs-Partikelgrößenanalyse.

3. Verwendung gemäß einem der Ansprüche 1 bis 2, wobei die Partikel, die Bor enthalten, im Wesentlichen aus Colemanit bestehen.

4. Verwendung gemäß einem der Ansprüche 1 bis 3, wobei die Partikel, die Bor enthalten, 30 bis 80 % des Gewichts der Zusammensetzung auf Ölbasis ausmachen, bevorzugt 50 bis 80 %.

5. Verwendung gemäß einem der Ansprüche 1 bis 4, wobei wenigstens 95 % der Partikel, die Bor enthalten, eine Größe im Bereich von 0,1 bis 50 µm aufweisen.

6. Verwendung gemäß einem der Ansprüche 1 bis 5, wobei das Öl in der auf Öl basierenden Zusammensetzung ausgewählt ist aus der Gruppe bestehend aus natürlichem Öl, Mineralöl, synthetischem Öl oder jeglicher Mischung zweier oder mehrerer der erwähnten Öle.

7. Verwendung gemäß Anspruch 6, wobei das natürliche Öl in der auf Öl basierenden Zusammensetzung ein pflanzliches Öl ist.

8. Verwendung gemäß einem der Ansprüche 1 bis 7, wobei die Zusammensetzung auf Ölbasis weiter eines oder mehrere der folgenden Mittel aufweist: ein Dispergiermittel, ein Rheologieadditiv, ein Verdickungsmittel, ein Antiabsetzmittel und/oder einen Farbstoff.

9. Verwendung gemäß einem der Ansprüche 1 bis 8, wobei die Beschichtung mit der Zusammensetzung auf Ölbasis weniger als ein Gewichtsprozent des harnstoffbasierten Düngemittelpartikels ausmacht, mehr bevorzugt weniger als 0,6 Gewichtsprozent.

10. Verwendung gemäß einem der Ansprüche 1 bis 9, wobei die harnstoffbasierten Düngemittelpartikel ausgewählt sind aus der Gruppe bestehend aus Harnstoff, Harnstoffkalziumsulfat (UCaS), Harnstoffkalziumnitrat (UCaN), Harnstoffmagnesiumnitrat (UMgP), Harnstoffkalziumphosphat (UCaP), Harnstoffmagnesiumphosphat (UMgP), Harnstoffsuperphosphat (USP), Harnstoffkalziumammoniumnitrat (UCAN), Harnstoffammoniumsulfat (UAS), Harnstoffphosphat, Harnstoffammoniumphosphat (UAP), Harnstoffkaliumsalze (UK), harnstoffbasierte NPK-Düngemittelpartikel, und Mischungen hieraus.

11. Verwendung gemäß einem der Ansprüche 1 bis 10, wobei die Düngemittelpartikel weiter eine Quelle für einen beliebigen der sekundären Nährstoffe Kalzium, Magnesium, Sulfur und/oder einen beliebigen der Mikronährstoffe Bor, Kupfer, Eisen, Mangan, Molybdän und Zink und Mischungen hieraus umfassen.

## Revendications

1. Utilisation d'une composition à base huileuse comprenant des particules contenant du bore, pour la réduction de la volatilisation de l'ammoniac lors de l'application sur le sol de particules d'engrais à base d'urée, dans laquelle les particules d'engrais à base d'urée sont enrobées par la composition à base huileuse comprenant des particules contenant du bore avant leur application sur le sol ;
**caractérisée par le fait que** les particules contenant du bore sont essentiellement constituées d'un matériau présentant une faible solubilité dans l'eau inférieure à 10 g/L à 25°C ; et au moins 95 % des particules contenant du bore ont une taille de particule dans la plage de 0,1 à 60 µm, telle que mesurée par analyse par diffraction laser.

2. Utilisation de particules d'engrais à base d'urée enrobées par une composition à base huileuse comprenant des particules contenant du bore pour la réduction de la volatilisation de l'ammoniac lors de l'application sur le sol des particules d'engrais à base d'urée,
**caractérisée par le fait que** les particules contenant du bore sont essentiellement constituées d'un matériau présentant une faible solubilité dans l'eau inférieure à 10 g/L à 25°C ; et au moins 95 % des particules contenant du bore ont une taille de particule dans la plage de 0,1 à 60 µm, telle que mesurée par analyse par diffraction laser.

3. Utilisation selon l'une quelconque des revendications 1 et 2, dans laquelle les particules contenant du bore sont essentiellement constituées de colémanite.

4. Utilisation selon l'une quelconque des revendications 1 à 3, dans laquelle les particules contenant du bore représentent 30 à 80 % en poids de la composition à base huileuse, de façon davantage préférée 50 à 80 % en poids.

5. Utilisation selon l'une quelconque des revendications 1 à 4, dans laquelle au moins 95 % des particules contenant du bore ont une taille dans la plage de 0,1 à 50 µm.

6. Utilisation selon l'une quelconque des revendications 1 à 5, dans laquelle l'huile dans la composition à base huileuse est choisie dans le groupe de l'huile naturelle, l'huile minérale, l'huile synthétique, ou tout mélange d'au moins deux des huiles susmentionnées.

7. Utilisation selon la revendication 6, dans laquelle l'huile naturelle dans la composition à base huileuse est une huile végétale.

8. Utilisation selon l'une quelconque des revendications 1 à 7, dans laquelle la composition à base huileuse comprend en outre un ou plusieurs parmi un agent dispersant, un agent de rhéologie, un épaississant, un agent anti-sédimentation et/ou une matière colorante.

9. Utilisation selon l'une quelconque des revendications 1 à 8, dans laquelle les particules d'engrais à base d'urée sont enrobées avec moins de 1 % en poids de la composition à base huileuse, de façon davantage préférée moins de 0,6 % en poids.

10. Utilisation selon l'une quelconque des revendications 1 à 9, dans laquelle les particules d'engrais à base d'urée sont choisies dans le groupe de l'urée, du sulfate d'urée et de calcium (UCaS), du nitrate d'urée et de calcium (UCaN), du nitrate d'urée et de magnésium (UMgN), du phosphate d'urée et de calcium (UCaP), du phosphate d'urée et de magnésium (UMgP), du superphosphate d'urée (USP), du nitrate d'urée, de calcium et d'ammonium (UCAN), du sulfate d'urée et d'ammonium (UAS), du phosphate d'urée, du phosphate d'urée et d'ammonium (UAP), des sels d'urée et de potassium (UK), des particules d'engrais NPK à base d'urée, et des mélanges de ceux-ci.

11. Utilisation selon l'une quelconque des revendications 1 à 10, dans laquelle les particules d'engrais comprennent en outre une source de l'un quelconque des nutriments secondaires calcium, magnésium, soufre, et/ou l'un quelconque des micronutriments bore, cuivre, fer, manganèse, molybdène et zinc, et mélanges de ceux-ci.
